**Europäisches Patentamt**

**European Patent Office**

**Office européen des brevets**

(19)

(11) Numéro de publication: **0 127 555**
**B1**

(12)

# FASCICULE DE BREVET EUROPÉEN

(45) Date de publication du fascicule du brevet:
**05.11.86**

(21) Numéro de dépôt: **84420087.3**

(22) Date de dépôt: **15.05.84**

(51) Int. Cl.⁴: **B 23 B 35/00,** B 23 B 51/00

(54) **Dispositif de protection d'un tissu mural ou autre lors du perçage de son support.**

(30) Priorité: **25.05.83 FR 8308952**

(43) Date de publication de la demande:
**05.12.84 Bulletin 84/49**

(45) Mention de la délivrance du brevet:
**05.11.86 Bulletin 86/45**

(84) Etats contractants désignés:
**AT BE CH DE GB IT LI LU NL SE**

(56) Documents cité:
**DE-A-3 129 375**
**FR-A-705 225**
**US-A-2 170 211**
**US-A-2 210 128**

(73) Titulaire: **Giughese, Michel, 51, rue de la Balme,
F-69003 Lyon (FR)**

(72) Inventeur: **Giughese, Michel, 51, rue de la Balme,
F-69003 Lyon (FR)**

(74) Mandataire: **Maureau, Bernard, CABINET
GERMAIN & MAUREAU 20, boulevard E.
Deruelle B.P. 11, F-69392 Lyon Cédex 06 (FR)**

EP 0 127 555 B1

LIBER, STOCKHOLM 1986

## Description

La présente invention concerne un dispositif pour protéger un tissu tendu sur un mur, ou tout autre produit similaire tel que moquette bouclée, thibaude, tissu collé sur mousse..., lors du perçage de son support.

Il est bien connu que le perçage, par exemple, d'un mur tendu de tissu est une opération très délicate, du fait de la présence non seulement du tissu mais aussi du molleton placé entre ce tissu et le mur. En cours de perçage, les fibres du tissu et/ou du molleton s'enroulent en effet autour du foret, ce qui provoque instantanément des dégradations importantes du tissu, et notamment de grandes déchirures.

Une solution pour pallier cet inconvénient consiste à couper simultanément le tissu et le molleton à l'aide d'un emporte-pièce. Non seulement cette manipulation est malaisée à effectuer, mais elle est aussi peu fiable. En effet, la plupart du temps, il reste toujours au moins une fibre de molleton qui n'est pas coupée et qui, lors du perçage, s'enroule autour du foret, provoquant alors une dégradation importante du tissu tendu. Afin d'éviter cette dégradation du tissu, on est généralement amené à le couper selon un diamètre beaucoup plus important que le diamètre de perçage (environ trois fois plus grand), ce qui peut nuire beaucoup à l'esthétique finale.

Le but de la présente invention est de remédier à ces inconvénients et notamment de prévoir un dispositif permettant, sans préparation préalable spéciale du tissu, de percer un mur tendu de tissu ou similaire sans endommager ledit tissu et sans pour autant pratiquer dans le tissu d'ouverture de dimension supérieure à celle du perçage dans le mur. A cet effet, le dispositif selon l'invention comporte une tête de protection constituée en combinaison par un manchon cylindrique, présentant en son centre un trou cylindrique de diamètre légèrement supérieur à celui du perçage et, sur sa face en bout tournée vers le mur, une pluralité de pointes réparties régulièrement selon au moins un cercle compris entre le trou central et la périphérie du manchon, par un ressort comprimé entre l'autre face en bout du manchon et un mandrin et maintenant par la pression qu'il exerce les pointes enfoncées dans le tissu et le molleton ou autre, et par un roulement placé sur un foret et permettant d'assurer la fixité de ce manchon lors de la rotation du mandrin. De cette façon, les pointes maintiennent les fibres du tissu et du molleton pendant le perçage et empêchent ceux-ci de se déchirer.

Selon une forme intéressante de réalisation, la bague intérieure du roulement est rendue solidaire du foret par l'intermédiaire d'une bague en caoutchouc placée entre la tige du foret et cette bague intérieure du roulement, la bague extérieure fixe du roulement est enfoncée de force dans un boîtier cylindrique présentant un trou central pour le passage du foret, et le ressort est comprimé entre la face de ce boîtier tournée vers la pointe du foret et l'autre face en bout du manchon. De cette façon, le manchon est en appui, par l'intermédiaire du boîtier cylindrique et du ressort, contre la bague extérieure fixe du roulement et n'est donc pas entraîne en rotation lors du perçage.

Dans cette forme de réalisation, le manchon et le boîtier cylindrique comportent chacun un évidement pour assurer le logement et l'appui de chacune des extrémités du ressort. De cette façon, le ressort est bien maintenu et ne risque pas de se déplacer radialement et de heurter le foret.

Selon une autre forme, de rélisation, la bague extérieure fixe du roulement est emmanchée de force dans un évidement du manchon, sa bague intérieure tourne librement sur l'extrémite du foret et le ressort est comprimé entre la bague intérieure de ce roulement et le mandrin de la perceuse.

Avantageusement, le manchon cylindrique comporte au moins douze courtes pointes réparties régulièrement sur au moins un cercle compris entre le trou central et la périphérie du manchon. De cette façon, on augmente encore la fiabilité du maintien des fibres et l'efficacité de la tête du dispositif.

Avantageusement aussi, un petit ressort complémentaire est placé entre la face du manchon tournée vers le mur et ce mur. Ce ressort applique élastiquement le tissu et le molleton sur le mur, et contribue encore à les immobiliser, améliorant ainsi l'efficacité du système.

Une gorge circulaire peut être prévue sur la périphérie du manchon pour y loger le ressort complémentaire.

Enfin de façon intéressante le trou du manchon cylindrique peut avoir un diamètre supériur de 0.1 mm à celui du foret, le manchon cylindrique étant en polyamide.

De toute façon l'invention sera mieux comprise à l'aide de la description qui suit, en référene au dessin schématique annexé représentant, à titre d'exemples non limitatifs, quelques formes d'exécution de ce dispositif de protection:

Figure 1 est une vue en coupe longitudinale du dispositif selon l'invention;

Figure 2 est une vue de face de la tête de protection de figure 1:

Figure 3 est une vue similaire à figure 1 d'une autre forme de réalisation;

Figure 4 est une vue en coupe longitudinale à échelle agrandie montrant une variante de la tête du dispositif et;

Figure 5 est une vue en coupe selon 5/5 de figure 4. Le dispositif de protection réprésente à la figure 1 comporte essentiellement une tête de protection (1), un ressort (2) et un roulement à billes (3) montés sur un foret (4), ce foret étant serré dans le mandrin (5) d'une perceuse pour effectuer le perçage dans un mur ou autre support tendu de tissu ou similaire.

La tête de protection (1) est formée par un manchon cylindrique en polyamide (7), présentant un trou central (7a) de diamètre supérieur de 0,1 mm à celui du foret (4) pour l'introduction de ce manchon (7) sur le foret (4), et par six pointes metalliques (8) enfoncées dans le manchon (7) et réparties régulièrement sur un cercle coaxial au trou (7a) et compris entre ce trou et la périphérie du manchon (7). Ces pointes (8) dépassent de la tête du foret (4) de façon à immobiliser les fibres du tissu avant que la tête du foret (4) n'entre en contact avec elles. Le manchon cylindrique (7) comporte un évidement (7b) pour le logement d'une extrémité (2a) du ressort (2). Celui-ci est comprimé entre le manchon (7) et un boîtier cylindrique (9) présentant un évidement (9a) pour le logement de son autre extrémité (2b). Le boîtier (9) présente en outre un trou central (9b) de diamètre légèrement supérieur à celui du foret pour le passage de ce dernier. La bague extérieure (3a) du roulement à billes est emmanchée de force dans ce boîtier (9). La bague intérieure (3b) de ce roulement est fixée à la tige du foret (4) par l'intermédiaire d'une bague en plastique (10).

Dans cette disposition, la tête de protection (1) du dispositif appuie, par l'intermediaire du ressort (2) et du boîtier (9), sur la bague extérieure (3a) fixe du roulement (3) et reste donc immobile pendant l'opération de perçage.

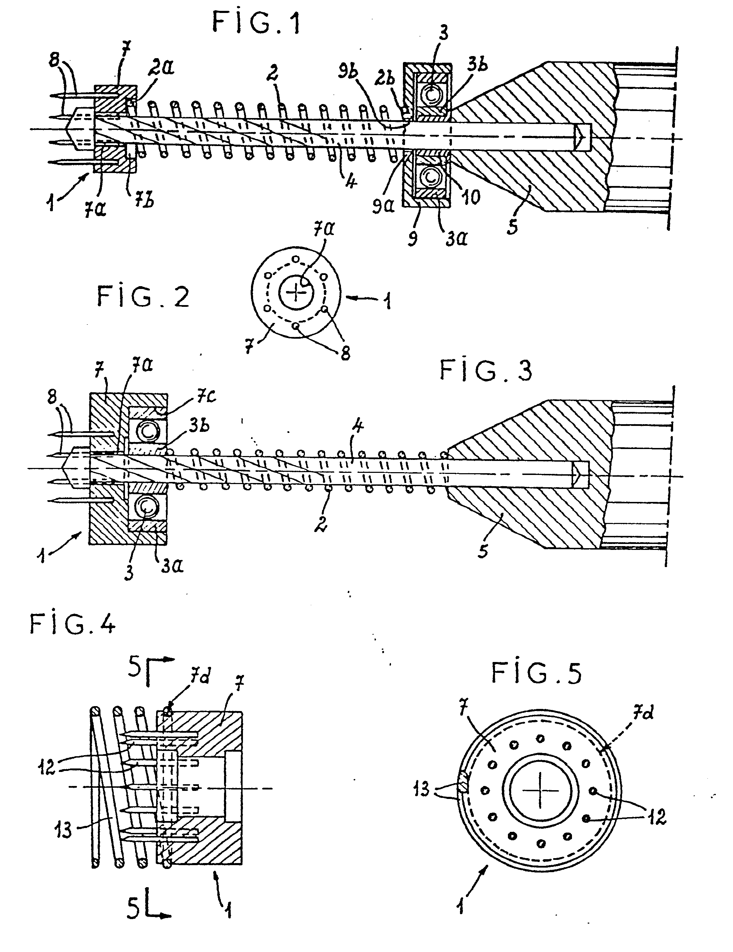

La figure 3 montre une autre forme de réalisation du dispositif de protection dans laquelle les mêmes références désignent les mêmes éléments; mais dans cette forme de réalisation le manchon cylindrique (7) est de dimensions plus importantes et comporte un alésage (7c) pour le logement du roulement (3). La bague extérieure (3a) de celui-ci est serrée dans l'alésage (7c). La bague intérieure (3b) du roulement repose directement sur le foret, et le ressort (2) est comprimé entre cette bague intérieure mobile (3b) et le mandrin (5) de la perceuse.

Les figures 4 et 5 montrent une variante de la tête de protection dans laquelle les mêmes références désignent les mêmes éléments. Cette tête comporte un manchon cylindrique (7) similaire à celui de la première forme de réalisation du dispositif: mais dans ce manchon sont enfoncées douze pointes (12) plus petites que les précédentes. Le manchon (7) comporte en outre une gorge circulaire extérieure (7d) pour le logement d'un petit ressort complémentaire (13), destiné à comprimer le tissu et le molleton contre le mur pendant le perçage et, par conséquent, à les immobiliser. Les pointes (12) complètent d'autant plus efficacement cette immobilisation qu'elles sont plus nombreuses.

## Revendications

1. - Dispositif de protection pour tissu mural ou similaire lors du perçage de son support, comportant une tête de protection (1) constituée en combinaison par un manchon cylindrique (7) présentant en son centre un trou cylindrique (7a) de diamètre légèrement supérieur à celui du perçage et, sur sa face en bout tournée vers le mur, une pluralité de pointes (8) réparties régulièrement selon au moins un cercle compris entre le trou central (7a) et la périphérie du manchon (7), par un ressort (2) comprimeé entre l'autre face en bout du manchon (7) et un mandrin (5) et maintenant par la pression qu'il exerce les pointes (8) enfoncées dans le tissu et le molleton ou autre, et par un roulement (3) placé sur un foret (4) et permettant d'assurer la fixité de ce manchon (7) lors de la rotation du mandrin (5).

2. - Dispositif de protection selon la revendication 1, caracterisé en ce que la bague intérieure (3b) du roulement (3) est rendue solidaire du foret (4) par l'intermédiare d'une bague en caoutchouc (10) placée entre la tige du foret (4) et cette bague intérieure (3b) du roulement, la bague extérieure (3a) fixe du roulement (3) est enfoncée de force dans un boîtier cylindrique (9) présenant un trou central (9b) pour le passage du foret (4), et le ressort (2) est comprimé entre la face de ce boîtier (9) tournée vers la pointe du foret (4) et l'autre face en bout du manchon (7).

3. - Dispositif de protection selon la revendicarion 2, caractérisé en ce que le manchon (7) et le boîtier cylindrique (9) comportent chacun un évidement (9a, 7b) pour assurer le logement et l'appui de chacune des extrémités (2a, 2b) du ressort.

4. - Dispositif de protection selon la revendication 1, caractérisé en ce que la bague extérieure (3a) fixe du roulement est emmanchée de force dans un évidement (7c) du manchon, sa bague intérieure (3b) tourne librement sur l'extrémité du foret (4) et le ressort (2) est comprimé entre la bague intérieure (3b) de ce roulement et le mandrin (5) de la perceuse.

5. - Dispositif de protection selon l'une quelconque des revendications 1 à 4, caractérisé en ce que le manchon cylindrique (7) comporte au moins douze courtes pointes (12) réparties régulièrement sur au moins un cercle compris entre le trou central (7a) et la périphérie du manchon.

6. - Dispositif de protection selon l'une quelconque des revendications 1 à 5, caractérisé en ce qu'un petit ressort (13) complémentaire est placé entre la face du manchon (7) tournée vers le mur et ce mur.

7. - Dispositif de protection selon la revendication 6, caractérisé en ce qu'une gorge circulaire (7d) est prévue sur la périphérie du manchon (7) pour assurer le logement du ressort complémentaire (13).

8. - Dispositif de protection selon l'une quelconque des revendications 1 à 7, caractéris51 en ce que le trou (7a) du manchon cylindrique à un diamètre supérieur de 0,1 mm à celui du foret (4).

9. - Dispositif de protection selon l'une quelconque des revendications 1 à 8, caractérisé en ce que le manchon cylindrique (7) est en polyamide.

**Patentansprüche**

1. Schutzeinrichtung für ein Mauerspanngewebe oder dergleichen, während dessen Träger gebohrt wird, dadurch gekennzeichnet, daß sie einen Schutzkopf (1) umfaßt, welcher gebildet wird durch eine zylindrische Hülse (7) mit einer zentralen zylindrischen Durchbrechung (7a) von gegenüber der Mauerbohrung geringfügig größerem Durchmesser und mit einer Vielzahl von Nadeln (8), die an ihrer der Mauer zugewandten Stirnfläche angeordnet und regelmäßig auf wenigstens einem Kreis zwischen der zentralen Durchbrechung (7a) und der Peripherie der Hülse (7) verteilt sind, ferner durch eine zwischen der anderen Stirnfläche der Hülse (7) und einem Bohrfutter (5) eingespannte Feder (2), welche durch den von ihr erzeugten Druck die Nadeln (8) in Eingriff mit dem Gewebe und dem Molton oder dergleichen hält, und durch ein auf einem Bohrer (4) angeordnetes Wälzlager (3), welches ein Stillstehen dieser Hülse (7) während der Drehung des Bohrfutters (5) ermöglicht.

2. Schutzeinrichtung nach Anspruch 1, dadurch gekennzeichnet, daß der Innenring (3b) des Wälzlagers mit dem Bohrer (4) mittels eines Kautschuk-Ringes (10), welcher zwischen dem Schaft des Bohrers (4) und diesem Innenring (3b) des Wälzlagers angeordnet ist, fest verbunden ist, daß der feststehende Außenring (3a) des Wälzlagers (3) kraftschlüssig in eine zylindrische Muffe (9) eingepreßt ist, die eine zentrale Durchbrechung (9b) für den Durchtritt des Bohrers aufweist, und daß die Feder (2) zwischen der der Spitze des Bohrers (4) zugewandten Fläche dieser Muffe (9) und der anderen Stirnfläche der Hülse (7) eingespannt ist.

3. Schutzeinrichtung nach Anspruch 2, dadurch gekennzeichnet, daß die Hülse (7) und die zylindrische Muffe (9) jeweils eine Ausnehmung (9a, 7b) aufweisen, die jeweils als Aufnahme und Abstützung der jeweiligen Enden (2a, 2b) der Feder dienen.

4. Schutzeinrichtung nach Anspruch 1, dadurch gekennzeichnet, daß der feststehende Außenring (3a) des Wälzlagers kraftschlüssig in eine Ausnehmung (7c) der Hülse eingepreßt ist, daß sein Innenring (3b) auf dem Ende des Bohrers (4) drehbar ist und daß die Feder (2) zwischen dem Innenring (3b) des Wälzlagers und dem Bohrfutter (5) der Bohrmaschine eingespannt ist.

5. Schutzeinrichtung nach einem der Ansprüche 1 bis 4, dadurch gekennzeichnet, daß die zylindrische Hülse (7) wenigstens ein Dutzend kurze Nadeln (12) aufweist, die regelmäßig auf wenigstens einem Kreis zwischen der zentralen Durchbrechung (7a) und der Peripherie der Hülse verteilt sind.

6. Schutzeinrichtung nach einem der Ansprüche 1 bis 5, dadurch gekennzeichnet, daß eine kleine Zusatzfeder (13) zwischen der der Mauer zugewandten Stirnfläche der Hülse (7) und dieser Mauer angeordnet ist.

7. Schutzeinrichtung nach Anspruch 6, dadurch gekennzeichnet, daß eine Ringnut (7d) in der Peripheriefläche der Hülse (7) zur Aufnahme der Zusatzfeder (13) vorgesehen ist.

8. Schutzeinrichtung nach einem der Ansprüche 1 bis 7, dadurch gekennzeichnet, daß die Durchbrechung (7a) der zylindrischen Hülse (7) einen Durchmesser aufweist, welcher um 0,1 mm größer als der des Bohrers (4) ist.

9. Schutzeinrichtung nach einem der Ansprüche 1 bis 8, dadurch gekennzeichnet, daß die zylindrische Hülse (7) aus Polyamid ist.

**Claims**

1. A device to protect wall fabric or similar material whilst its support is being drilled, comprising a protection head (1) formed by the combination of a cylindrical casing (7) having at its centre a cylindrical hole (7a) of diameter slightly greater than that of the drilled hole, and on its end surface facing the wall a plurality of spikes (8) uniformly distributed around at least one circle lying between the central hole (7a) and the periphery of the casing (7) by a spring (2) compressed between the other end surface of the casing (7) and a drill chuck (5) and by the pressure that it produces maintaining the spikes (8) embedded in the fabric and felt or the like, and by a ball-bearing (3) placed on a drill (4) ensuring that the casing (7) is held in a fixed position whilst the drill chuck (5) rotates.

2. A protective device according to Claim 1, characterized in that the inner ball-race (3b) of ball-bearing (3) is rigidly fixed to the drill (4) by the inter-position of a rubber collar (10) placed between the stem of the drill (4) and this inner ball-race (3b) of the ball-bearing, the outer fixed ball-race (3a) of ball-bearing (3) being force-fitted into a cylindrical casing (9) having a central hole (9b) for the passage of the drill (4), the spring (2) being compressed between the face of the casing (9) that is turned towards the point of the drill (4) and the other end face of casing (7).

3. A protective device according to Claim 2, characterized in that casing (7) and cylindrical casing (9) each possess a recess (9a, 7b) to ensure that each end (2a, 2b) of the spring is seated and supported.

4. A protective device according to Claim 1, characterized in that the outer fixed ball-race (3a) of the ball-bearing is force-fitted into a recess (7c) of casing (7), its inner ball-race (3b) turning freely on the outside of the drill (4), and that spring (2) is compressed between the inner ball-race (3b) of this ball-bearing and the drill chuck (5).

5. A protective device according to any of Claims 1 to 4, characterized in that the cylindrical casing (7) comprises at least twelve short spikes (12) uniformly distributed around at least one circle lying between the central hole (7a) and the periphery of the casing.

6. A protective device according to any of Claims 1 to 5, characterized in that a small supplementary spring (13) is placed between the face of casing (7) facing the wall and that wall.

7. A protective device according to Claim 6, characterized in that a circular groove (7d) is provided on the periphery of casing (7) to ensure the fixation of supplementary spring (13).

8. A protective device according to any of Claims 1 to 7, characterized in that the hole (7a) in cylindrical casing has a diameter 0.1mm greater than that of drill (4).

9. A protective device according to any of Claims 1 to 8, characterized in that the cylindrical casing (7) consists of polyamide.

# FIG.1

# FIG.2

# FIG.3

# FIG.4

# FIG.5